# EUROPÄISCHE PATENTANMELDUNG

(11) **EP 1 106 052 A1**
(43) Veröffentlichungstag der Anmeldung: **13.06.2001**
(21) Anmeldenummer: 00126366.4
(22) Anmeldetag: 02.12.2000
(51) Int. Cl.: A01D 61/00

(54) **Mähdrescher**

(30) Priorität: 07.12.1999 DE 19958880
(71) Anmelder: DEERE & COMPANY, Moline, Illinois 61265-8098 (US)
(72) Erfinder: Preece, David Charles, Nottingham NG13 90A (GB)
(74) Vertreter: Holst, Sönke, Dr.

(57) **Zusammenfassung**

Die Erfindung bezieht sich auf einen Mähdrescher (10) mit einer Erntegutbergungsvorrichtung, einer Dreschvorrichtung (25) und einer Reinigungsvorrichtung (34), wobei der Dreschvorrichtung (25) eine Vor-Auslöseeinrichtung zum Herauslösen von Gut aus dem Gutstrom und eine Trennvorrichtung (42) vorgeschaltet ist, die ausgelöstes Gut aus dem Gutstrom entnimmt und an der Dreschvorrichtung (25) vorbei der Reinigungsvorrichtung (35) zuführt. Um das Herauslösen der Körner aus dem Erntegut zu verbessern, wird vorgeschlagen, daß eine Guttransporteinrichtung der Erntegutbergungseinrichtung als Vor-Auslöseeinrichtung wirkt.

## Beschreibung

Die Erfindung betrifft einen Mähdrescher mit einer Erntegutbergungsvorrichtung, einer Dreschvorrichtung und einer Reinigungsvorrichtung, wobei der Dreschvorrichtung eine Vor-Auslöseeinrichtung zum Herauslösen von Gut und eine Trennvorrichtung vorgeschaltet ist, die ausgelöstes Gut aus dem Gutstrom entnimmt und an der Dreschvorrichtung vorbei der Reinigungsvorrichtung zuführt.

In der GB 1 451 755 A ist ein Mähdrescher beschrieben, bei dem am Boden des Schrägförderers eine siebartige Einrichtung vorgesehen ist, mittels der im Strom des geernteten Gutes enthaltene, aber bereits aus dem Getreide herausgelöste Körner vom verbleibenden Gutstrom getrennt werden. Der Hauptgutstrom wird einer konventionellen Dreschtrommel zugeführt, während die aus der siebartigen Einrichtung kommenden Körner einem Vorbereitungsboden zugeführt werden, von dem sie zur Siebeinrichtung des Mähdreschers verbracht werden.

Die DD 273 963 A offenbart einen Axialmähdrescher mit einer rotierenden Trommel. Der Trommel wird das Gut mittels eines Schneckenförderers zugeführt, der in einem im unteren Bereich mit siebartigen Öffnungen versehenen Gehäuse rotiert. Aus dem Getreide herausgelöste Körner werden von dort über einen weiteren Förderer der Siebeinrichtung zugeführt.

Aus der EP 95 747 A ist ein Mähdrescher mit zwei konventionellen Drescheinheiten bekannt, von denen eine am Eingangsbereich des Schrägförderers sitzt, und eine in bekannter Weise den Strohschüttlern vorgelagert ist. Von der ersten Drescheinheit ausgedroschene Körner werden über einen separaten Förderer dem Vorbereitungsboden zugeführt.

Bei den aus der GB 1 451 755 A und der DD 273 963 A bekannten Mähdreschern findet kein besonderer Auslöse- oder Dreschvorgang für das an der eigentlichen Dreschtrommel vorbeigeleitete Getreide statt. Nur sehr reife Körner, die sich selbsttätig bei leichter Berührung aus dem Getreide lösen und durch die mit dem Schneid- und Transportvorgang verbundenen mechanischen Erschütterungen bereits vorgetrennt sind, werden an der Dreschtrommel vorbeigeleitet. Daher arbeiten diese Vorrichtungen nicht sehr effektiv, da sie keine wesentliche Entlastung der Dreschtrommel bewirken. Bei der EP 95 747 A ist die zweite Dreschtrommel konstruktiv aufwendig und kostenintensiv.

Das der vorliegenden Erfindung zugrunde liegende Problem wird darin gesehen, die Nachteile des Standes der Technik zu vermeiden.

Diese Aufgabe wird erfindungsgemäß durch die Lehre der Patentansprüche 1 und 11 gelöst, wobei in den weiteren Patentansprüchen Merkmale aufgeführt sind, die die Lösung in vorteilhafter Weise weiterentwickeln.

Der Kerngedanke der Erfindung besteht darin, eine Guttransporteinrichtung der Erntebergungseinrichtung als Vor-Auslöseeinrichtung einzusetzen. Die Erntegutbergungsvorrichtung ist in der Regel ein Schneidwerk, obwohl die Erfindung auch bei Maishäckslern oder -pflückern anwendbar ist. Beim Transport des Ernteguts wird durch hinreichend starke mechanische Einwirkung der Guttransporteinrichtung auf das Erntegut erreicht, daß sich reifes Gut vom verbleibenden Gut trennt. Es entsteht ein Gutstrom, in dem sowohl das abgetrennte (herausgelöste) Gut, in der Regel Körner, als auch noch nicht herausgelöstes Gut (weniger reife Körner) mit Pflanzenresten (Stroh) enthalten sind. Das abgetrennte Gut wird in der Trennvorrichtung vom verbleibenden Gut separiert. Das verbleibende Gut wird der Dreschvorrichtung zugeführt, während das abgetrennte Gut an der Dreschvorrichtung vorbei zur Reinigungsvorrichtung verbracht wird. Die Dreschvorrichtung wird entlastet, so daß eine Energieeinsparung stattfindet bzw. der maximal mögliche Durchsatz des Mähdreschers vergrößert wird.

Der Vorteil, der durch die Verwendung der Guttransporteinrichtung der Erntebergungseinrichtung als Vor-Auslöseeinrichtung erzielt wird, besteht zum einen in der Ersparnis einer separaten Vor-Auslöseeinrichtung, wie sie in der EP 95 747 A vorgesehen ist, zum anderen darin, daß der Gutstrom im Bereich der Erntebergungseinrichtung noch sehr breit ist, so daß ein Herauslösen des Guts aufgrund der größeren dafür zur Verfügung stehenden Fläche weniger problematisch ist als im Bereich des Schrägförderers, wo wesentlich weniger Fläche zur Verfügung steht.

Die Vor-Auslöseeinrichtung kann insbesondere ein Schneckenförderer sein. Ein Schneckenförderer weist in der Regel ein wendelförmig auf der Oberfläche einer kreiszylindrischen Trommel angeordnetes Transportelement auf. Vorzugsweise ist die äußere Oberfläche des Transportelements mit Erhebungen versehen. An den Erhebungen wird das Erntegut vorbeitransportiert, bzw. die Erhebungen werden über das Erntegut bewegt, so daß ein mechanischer Kontakt entsteht. Am Rand der Erhebungen findet im Ergebnis eine Art Dreschvorgang statt, bei dem reifes Gut vom verbleibenden Material abgelöst wird. Die Erhebungen sind vorzugsweise voneinander durch niedrigere Bereiche, quasi Täler, getrennt. Wie bereits angemerkt, bleiben das herausgelöste Gut und das verbleibende Gut in einem Strom vereint, bis sie in der Trennvorrichtung voneinander getrennt werden.

Die Form der Erhebungen ist grundsätzlich beliebig. Eine Rautenform hat sich bewährt, da das Gut immer auf eine gerade Kante trifft, unabhängig davon ob sich das Gut relativ zum Transportelement in azimutaler oder transversaler Richtung bewegt. Ein guter Herauslöseeffekt ist somit gewährleistet. Es wären aber auch quadratische, runde, dreiecksförmige oder beliebige andere Formen der Erhebungen denkbar.

Die äußere Oberfläche des Transportelements zwischen den Erhebungen ist vorteilhafterweise eben, so daß sich kein Gut dort ansammeln kann.

Weiterhin ist vorgeschlagen, das Transportelement mit einem Mitnehmerelement zu versehen, das über die äußere Oberfläche des Transportelements übersteht. Das Mitnehmerelement dient dazu, einen reibungslosen Transport des Gutes sicherzustellen und eventuelle Staus zu vermeiden. Es kann an der vor- bzw. nachlaufenden Kante des Transportelements angebracht sein. Die Anbringung an der nachlaufenden Kante ermöglicht einen besseren Kontakt zwischen den Erhebungen und dem Gut, während die Anbringung an der vorlaufenden Kante den Vorteil hat, daß sich kein Gut vor dem Mitnehmerelement ansammeln kann. Das Mitnehmerelement erstreckt sich vorzugsweise über die gesamte Länge des Transportelements.

In der Zeichnung sind zwei nachfolgend näher beschriebene Ausführungsbeispiele der Erfindung dargestellt. Es zeigt:
- Fig. 1: einen Mähdrescher in schematischer Seitenansicht,
- Fig. 2: eine Frontansicht des Schneidwerks des Mähdreschers der Figur 1,
- Fig. 3: einen vergrößerten Ausschnitt des Mähdreschers,
- Fig. 4: einen vergrößerten Ausschnitt des Mähdreschers nach einem zweiten Ausführungsbeispiel, und
- Fig. 5: eine alternative Ausführungsform eines Schneckenförderers für das Schneidwerk aus Figur 2.

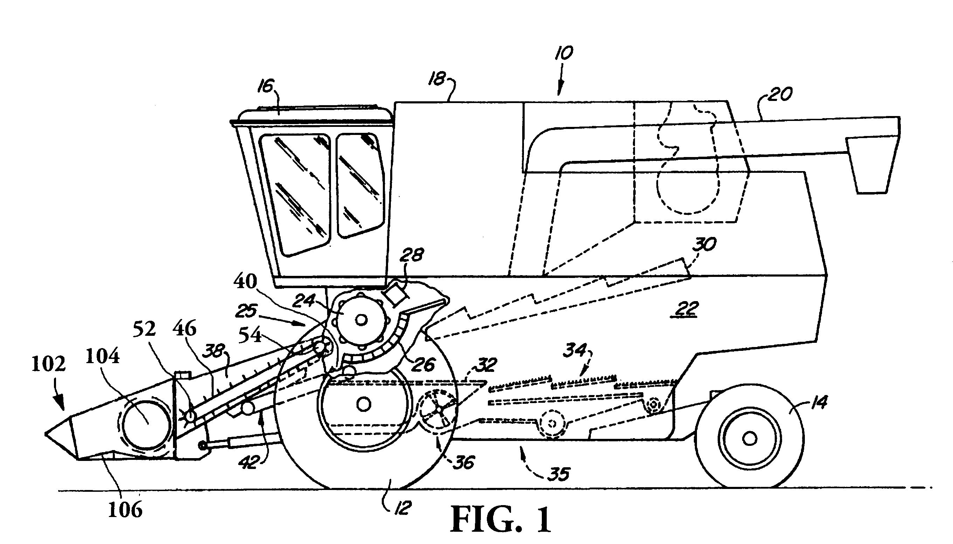

Ein in Figur 1 gezeigter Mähdrescher 10 ist auf vorderen angetriebenen und rückwärtigen lenkbaren Rädern 12 bzw. 14 getragen und weist eine Fahrerkabine 16 auf, von der aus er von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile, d. h. Restgut, nämlich Stroh oder Spindeln und abgesondertes Gut, nämlich Körner, zerlegt wird. Die Dreschtrommel 24 und der Dreschkorb 26 bilden zusammen eine Dreschvorrichtung 25. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile (Stroh, Spindeln) über die Schüttler 30 auf den Erdboden abgelegt werden und leichte Bestandteile mittels eines Gebläses 36 von den Sieben 34 ebenfalls auf den Erdboden geblasen werden. Der Vorbereitungsboden 32, die Siebe 34 und das Gebläse 36 bilden zusammen eine Reinigungsvorrichtung 35.

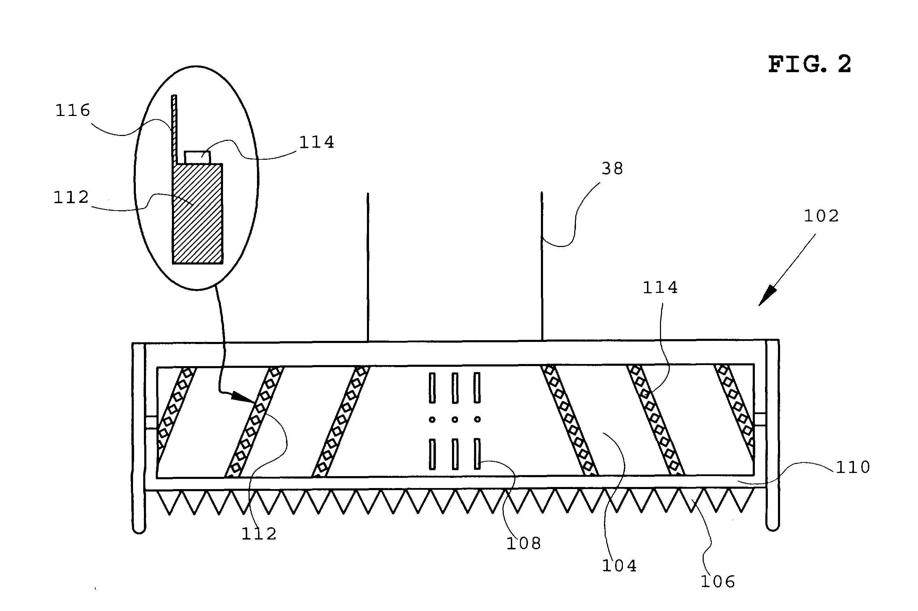

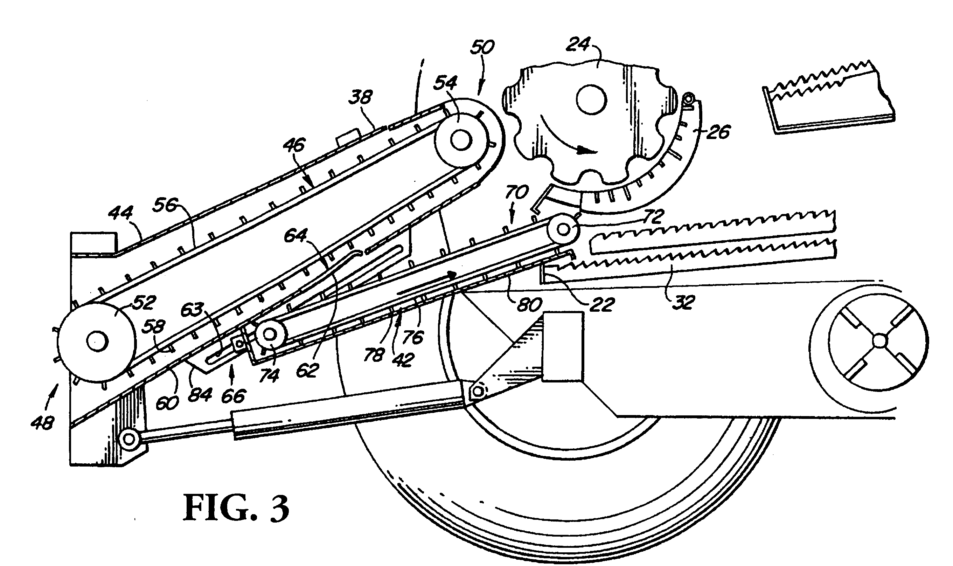

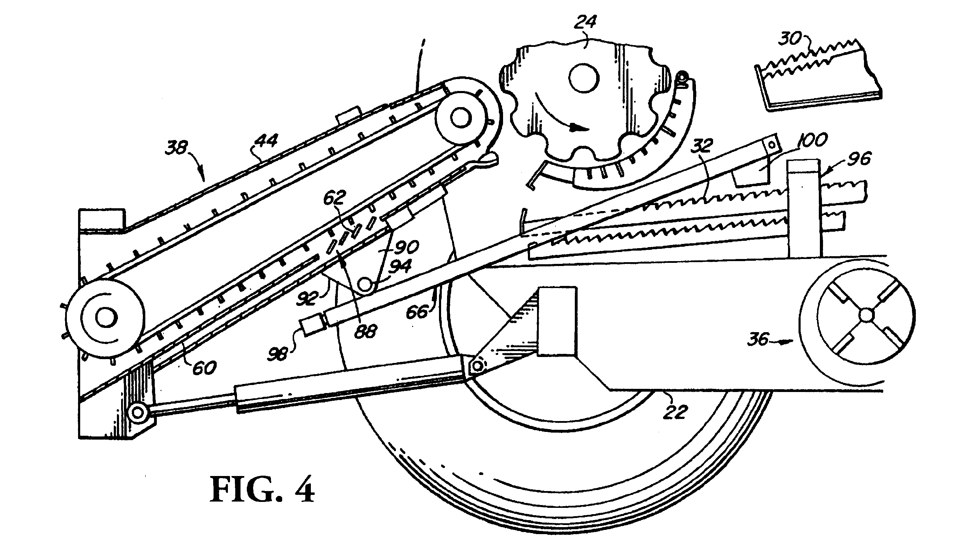

Auf dem Erdboden liegendes oder stehendes Gut wird über einen als Fördereinrichtung wirkenden Schrägförderer 38 und eine Steinfangmulde 40 der Dreschtrommel 24 zugeführt, nachdem es von einer Erntegutbergungsvorrichtung in Form eines Schneidwerks 102 vom Boden aufgenommen worden ist. Das Schneidwerk 102 ist frontseitig mit oszillierend bewegten Messern 106 versehen, die das Erntegut abtrennen. Letzteres wird mittels eines Schneckenförderers 104 von den (seitlichen) Außenbereichen des Schneidwerks 102 in dessen Mitte verbracht, wo es unter Mitwirkung von Einzugsfingern (s. Figur 2) vom Schrägförderer 38 erfaßt wird. Unterhalb des Schrägförderers 38 befindet sich eine Trennvorrichtung 42, die bezüglich der Figuren 3 und 4 näher erläutert wird.

In Figur 2 ist eine Frontansicht des Schneidwerks 102 dargestellt. Es weist über seine gesamte Breite Messer 106 auf, bei denen es sich in an sich bekannter Weise um zwei Messerbalken handelt, von denen einer (oder beide gegensinnig) seitlich, d. h. in Figur 2 von links nach rechts, hin- und her bewegt werden. Das von den auf dem Erdboden stehenbleibenden Stoppeln abgetrennte Erntegut wird von einem Schneckenförderer 104 erfaßt und zur Mitte des Schneidwerks 102 transportiert, wo es unter Mitwirkung von Einzugsfingern 108 dem Schrägförderer zugeführt wird. Der grundsätzliche Aufbau des Schneckenförderers 104 und der Einzugsfinger 108 ist an sich bekannt und bedarf daher keiner näheren Erläuterung. Es sei nur angemerkt, daß die Einzugsfinger 108 auf einer exzentrisch angeordneten Achse im Innern des Schneckenförderers 104 gelagert sind.

Der Schneckenförderer 104 ist in an sich bekannter Weise mit wendelförmig auf einer zylindrischen Trommel angeordneten Transportelementen 112 mit rechteckförmigem Außenquerschnitt und flacher äußerer Oberfläche versehen, bei denen es sich um Hohlprofile, gebogene oder gezogene Bleche oder massive Elemente handeln kann. Auf der äußeren Oberfläche der Transportelemente sind als Vor-Auslöseelemente Erhebungen 114 verteilt, die in der dargestellten Ausführungsform rautenförmig sind. Die Erhebungen 114 dienen dazu, in Zusammenwirken mit dem Boden 110 des Schneidwerks 102 die reiferen Körner aus dem Erntegut herauszulösen, es quasi vorzudreschen. Die Rautenform ermöglicht, daß das Erntegut sowohl bei seitlicher Relativbewegung zum Schneckenförderer 104, als auch bei Relativbewegung in Umfangsrichtung des Schneckenförderers 104 mit den Kanten (äußeren Berandungen) der Erhebungen 114 in Berührung kommt, an denen es eine Dreschwirkung erfährt. Anstelle von rautenförmigen Erhebungen können auch beliebige andere geometrische Formen, wie Kreise, Dreiecke oder Rechtecke für die Erhebungen 114 verwendet werden. Die Erhebungen können beispielsweise durch Pressen oder Tiefziehen hergestellt werden. Ihre Höhe kann einige Millimeter betragen. Der Abstand zwischen dem Boden 114 und dem Schneckenförderer 104 kann etwa wie bei konventionellen Schneidwerken dimensioniert sein.

Zur Verbesserung des Transportverhaltens des Schneckenförderers 104 sind sich über die Länge der Transportelemente 112 erstreckende, nach außen überstehende Mitnehmerelemente 116 in Form eines Blechs odgl. angebracht, die dafür sorgen, daß das Erntegut stets von den Transportelementen 112 mitgenommen wird. Die Mitnehmerelemente 116 sind wesentlich höher als die Erhebungen 114. Die Mitnehmerelemente 116 können an der in Rotationsrichtung des Schneckenförderers 104 vorlaufenden Seite der Transportelemente 112 angeordnet sein, oder an der nachlaufenden Seite. Die letztgenannte Alternative verspricht einen besseren Kontakt zwischen Erntegut und Erhebungen 114. Die Mitnehmerelemente 116 sind im oben links in Figur 2 dargestellten Ausschnitt vergrößert wiedergegeben und können einteilig mit den Transportelementen 112 insbesondere als (Hohl-) Profil hergestellt sein. Es wäre aber auch denkbar, sie separat herzustellen und an den Transportelementen 112 zu befestigen.

Die Erhebungen 114 auf den Transportelementen 112 und die Mitnehmer 116 bewirken, daß aus dem Erntegut reifere Körner ausgeschieden werden. Der Schrägförderer 38 wird somit mit einem Gemisch aus ausgedroschenen Körnern und Stroh mit noch nicht ausgedroschenen Körnern beaufschlagt.

Die in Figur 3 und 4 dargestellten Ausführungsformen ermöglichen, die bereits ausgedroschenen Körner an der Drescheinrichtung des Mähdreschers 10 vorbeizuleiten und sie der Siebeinrichtung 34 des Mähdreschers 10 zuzuführen. Man erreicht dadurch eine Verminderung der Belastung der Drescheinrichtung.

Figur 3 zeigt von dem Mähdrescher 10 nach Figur 1 im wesentlichen nur den Schrägförderer 38, die Trennvorrichtung 42, die Dreschtrommel 24, den Dreschkorb 26 und den Vorbereitungsboden 32. Der Schrägförderer 38 weist ein Gehäuse 44 und einen Umlaufförderer 46 auf. Das Gehäuse 44 hat im wesentlichen die Form eines Kanals, der sich zur Dreschtrommel 24 hin verjüngt und an einem einlaßseitigen Endbereich 48 und einem auslaßseitigen Endbereich 50 offen ist. Zwischen den Endbereichen 48 und 50 erstreckt sich eine als Boden des Gehäuses 44 dienende Förderfläche 60. In der oberen, stromabwärts gelegenen Hälfte der Förderfläche 60 sind mehrere Auslaßöffnungen 62 vorgesehen, die mittels Zinken 64 voneinander getrennt sind. Die Zinken 64 sind federnd ausgebildet und erstrecken sich in der Bewegungsrichtung des Gutes. In dem bevorzugten Ausführungsbeispiel steigen die Zinken 64 stromabwärts an, um eine geringe Erhebung zu bilden, die den Bewegungswiderstand des Guts geringfügig erhöht.

Der Umlaufförderer 46 weist nahe des einlaßseitigen Endbereichs 48 eine Umlenkwalze 52 und nahe des auslaßseitigen Endbereichs 50 eine Antriebswalze 54 auf, die parallelachsig zueinander verlaufen. Der Umlaufförderer 46 enthält zudem mehrere mit seitlichem Abstand parallel zueinander angeordnete Kettenstränge 56 und eine Vielzahl gleich beabstandeter Förderleisten 58, die auf den Kettensträngen 56 befestigt sind. Während sich die Kettenstränge 56 in der Förderrichtung erstrecken, verlaufen die Förderleisten 58 im wesentlichen quer zu dieser. Der Umlaufförderer 46 ist so ausgebildet und angeordnet, daß die Förderleisten 58 des unteren Trums mit relativ geringem Abstand zu der Förderfläche 60 von dem einlaßseitigen zu dem auslaßseitigen Endbereich 48, 50 bewegt werden und dabei über die Zinken 64 gleiten. Mit Ausnahme der Auslaßöffnungen 62 und der Zinken 64 entspricht der Schrägförderer 38 solchen herkömmlicher Bauart.

Zu der Trennvorrichtung 42, die zum Trennen des bereits abgeschiedenen Ernteguts (Körner) aus dem übrigen Erntgegut dient, zählen neben den Auslaßöffnungen 62 und den Zinken 64 ein Förderer 66. Der Förderer 66 befindet sich unterhalb des Schrägförderers 38 verbringt das bereits abgeschiedene Erntegut an der Dreschvorrichtung 25 vorbei direkt zum Vorbereitungsboden 32. Die Trennvorrichtung 42 ist einerseits mittels eines Trägers 68 an der Unterseite der Förderfläche 60 gehalten und andererseits in dem Rahmen 22 des Mähdreschers 10 gelagert.

Der Förderer 66 ist bei dem Ausführungsbeispiel nach Figur 2 in gleicher Weise wie der Umlaufförderer 46 des Schrägförderers 38 ausgebildet und fördert ebenfalls unterschlächtig. Hierzu weist er einen Umlaufförderer 70 und eine Antriebs- und eine Umlenkwalze 72 und 74 auf. In gleicher Weise sind Kettenstränge 76 und Förderleisten 78 vorgesehen. Der Förderer 66 enthält in dem dargestellten Ausführungsbeispiel kein kanal- oder schachtartiges Gehäuse, sondern eine Wanne 80, durch die sich das untere Trum des Umlaufförderers 70 bewegt. Die Wanne 80 ist an dem stromaufwärts gelegenen Ende beweglich mit dem Träger 68 verbunden und liegt an dem stromabwärts gelegenen Endbereich in dem Rahmen 22 auf, wo auch der Antrieb in die Antriebswalze 72 mittels eines nicht näher gezeigten Riementriebs eingeleitet wird.

Der Träger 68 enthält eine Platte 82, die in einer Kulissenführung 84 an der Unterseite der Förderfläche 60 befestigt ist, in begrenztem Umfang verschiebbar ist. Nachdem die Wanne 80 am Rahmen 22 lediglich schwenkbar, hingegen nicht verschiebbar angebracht ist, wird mit der Kulissenführung 84 die Schwenkmöglichkeit des Gehäuses 44 gewahrt.

Die Platte 82 weist eine Durchbrechung 86 auf, oberhalb deren sich stets die Auslaßöffnungen 62 befinden. Die Platte 82 nimmt mittels nicht gezeigter Lager die Umlenkwalze 74 drehbar auf und wird unter Vorspannung an der Förderfläche 60 gehalten, um den Umlaufförderer 70 stets gespannt zu halten.

Das vom Schneidwerk 102 kommende Erntegut wird in den Spalt zwischen dem unteren Trum des Umlaufförderers 46 und der Förderfläche 60 eingezogen und mittels der Förderleisten 58 mit Blick auf die Zeichnung von links nach rechts auf der Oberseite der Förderfläche 60 entlang bewegt. Während dieses Fördervorgangs wird sich aufgrund der mechanischen Einwirkung des Umlaufförderers 46 auf das Erntegut ein weiterer Teil des abzuscheidenden Guts lösen, aber dennoch von dem Gutstrom auf der Förderfläche 60 mitgerissen. Sobald der Gutstrom die Auslaßöffnungen 62 zwischen den Zinken 64 erreicht, können die bereits abgesonderten Erntegutteile durch die Auslaßöffnungen 62 und die Durchbrechung 86 in der Platte 82 dem Umlaufförderer 70 zufallen. Der Umlaufförderer 70 fördert ebenfalls mit den Förderleisten 78 seines unteren Trums das abgeschiedene Erntegut unterschlächtig in der Wanne 80 bis zur Abgabe auf den Vorbereitungsboden 32, wo es dem Reinigungsvorgang unterzogen wird.

In dem Ausführungsbeispiel nach Figur 4 ist eine andere Ausführungsform einer Trennvorrichtung 42 zu sehen. Funktionell gleiche Teile sind mit denselben Bezugszeichen versehen. Das Gehäuse 44 enthält eine Förderfläche 60, die auf ihrer dem Umlaufförderer 46 zugewandten Seite geriffelt, gewellt oder sonstwie geformt ist, um das darüber bewegte Gut in Schwingung oder Bewegung zu versetzen, damit weiteres abzuscheidendes Gut herausgelöst wird. Die Profilierung endet an der oder den Auslaßöffnungen 62. Die Auslaßöffnungen 62 werden bei dem Ausführungsbeispiel nach Figur 4 zwischen Lamellen 88 gebildet, die sich quer und in der Flußrichtung geringfügig ansteigend über die Breite der Förderfläche 60 erstrecken. Bei dem bevorzugten Ausführungsbeispiel sind vier Lamellen 88 vorgesehen. Die Neigung der Lamellen 88 hat eine weitere Erschütterung des Ernteguts zur Folge.

Unterhalb der Auslaßöffnungen 62 und vor dem Förderer 66 ist eine Übergabevorrichtung 90 vorgesehen. Die Übergabevorrichtung 90 enthält einen Trog 92 und einen als Schneckenförderer ausgebildeten Querförderer 94, der das aus den Auslaßöffnungen 62 angenommene abgeschiedene Gut auf einer Seite oder mittig oder an einer sonstigen geeigneten Stelle zusammenführt, um es dem Förderer 66 aufzugeben. Der Querförderer 94 wird auf nicht gezeigte Weise mittels z. B. eines Riementriebs angetrieben, der auch den Umlaufförderer 46 antreibt.

Der Förderer 66 ist bei dem Ausführungsbeispiel nach Figur 4 als ein Schneckenförderer ausgebildet, der sich von unterhalb des Querförderers 94, bzw. einer nicht näher gezeigten Abgabeöffnung in dem Trog 92 bis zu einem Nachdrescher 96 an dem Rahmen 22 erstreckt. Der Förderer 66 ist eine Förderschnecke in einem Schneckengehäuse, das im Bereich der Abgabeöffnung des Trogs 92 zur Annahme von abgesondertem Gut oben offen ist.

Der Förderer 66 wird mittels eines Motors 98 angetrieben, der als Hydraulikmotor ausgebildet ist und von einer nicht gezeigten Druckquelle angetrieben wird. Der Antrieb ist vorzugsweise mit dem Antrieb des Umlaufförderers 46 gekoppelt. Der Förderer 66 ist auf ebenfalls nicht gezeigte Weise vertikal schwenkbar angebracht, um einer Bewegung des Gehäuses 44 folgen und das abgesonderte Gut dennoch aufnehmen zu können. Der Förderer 66 erstreckt sich seitlich an dem Rahmen 22 des Mähdreschers 10 vorbei und läuft in einem Stutzen 100 aus, der sich nach unten und zu dem Nachdrescher 96 hin öffnet.

Der Nachdrescher 96 ist von bekannter herkömmlicher Bauart und besteht aus einer nicht gezeigten Reibtrommel, die um eine sich in der Fahrtrichtung erstreckende horizontale Achse dreht und in Zusammenarbeit mit Reibleisten an der Innenwandung eines Gehäuses das abgesonderte Gut in seine Einzelteile zerlegt, z. B. Ährenteile in Körner und Spreu. Der Nachdrescher 96 ist so angeordnet, daß er das abgesonderte Gut durch eine nicht näher bezeichnete Öffnung in dem Rahmen 22 auf den Vorbereitungsboden 32 wirft, von wo aus es dem weiteren Reinigungsvorgang zugeführt wird.

Die Funktion der Trennvorrichtung nach Figur 4 ist analog der nach Figur 3. Das gesamte Gutgemenge wird von dem Umlaufförderer 46 innerhalb des Gehäuses 44 auf der profilierten Förderfläche 60 entlang bewegt. Während der Bewegung wird sich ein weiterer Teil des im Scheidwerk 102 bereits vorgedroschenen Guts aus der Gutmatte absondern und von der Gutmatte bis zu den Auslaßöffnungen 62 mitgenommen, durch die es zu der Übergabevorrichtung 90 gelangt. Der Querförderer 94 innerhalb des Trogs 92 fördert das abgesonderte Gut dessen Abgabeöffnung zu, wo es in den Förderer 66 fällt. Der Förderer 66 führt das Gut zu dem Stutzen 100, wo es in den Nachdrescher 96 fällt, der es schließlich dem Vorbereitungsboden 32 aufgibt. Demnach wird auch bei diesem Ausführungsbeispiel bereits in der Fördervorrichtung 38 herausgelöstes Gut entnommen und an der Dreschvorrichtung 25 vorbei dem Reinigungsprozeß aufgegeben.

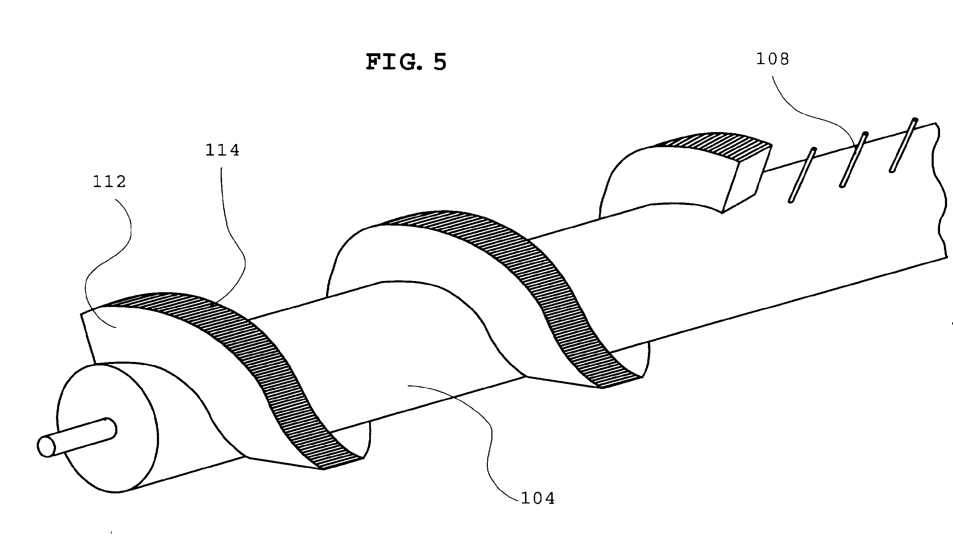

In Figur 5 ist eine alternative Ausführungsform eines Schneckenförderers 104 dargestellt. Anstelle der rautenförmigen Erhebungen 114 finden sich parallel zur Längsachse des Schneckenförderers 104 erstreckende Erhebungen Verwendung, die durch Täler voneinander getrennt sind. Es wäre auch denkbar, den in Figur 5 dargestellten Schneckenförderer 104 mit Mitnehmern 116 wie in Figur 2 auszustatten. Auch haifischflossenartige Mitnehmer anstelle der oder zusätzlich zu den Mitnehmern 116 wären bei Schneckenförderern nach Figur 2 und 5 denkbar.

## Patentansprüche

1. Mähdrescher (10) mit einer Erntegutbergungsvorrichtung, einer Dreschvorrichtung (25) und einer Reinigungsvorrichtung (34), wobei der Dreschvorrichtung (25) eine Vor-Auslöseeinrichtung zum Herauslösen von Gut und eine Trennvorrichtung (42) vorgeschaltet ist, die ausgelöstes Gut aus dem Gutstrom entnimmt und an der Dreschvorrichtung (25) vorbei der Reinigungsvorrichtung (35) zuführt, dadurch gekennzeichnet, daß eine Guttransporteinrichtung der Erntegutbergungseinrichtung als Vor-Auslöseeinrichtung wirkt.

2. Mähdrescher nach Anspruch 1, dadurch gekennzeichnet, daß die Vor-Auslöseeinrichtung ein Schneckenförderer (102) ist.

3. Mähdrescher nach Anspruch 2, dadurch gekennzeichnet, daß der Schneckenförderer (102) ein wendelförmig angeordnetes Transportelement (112) mit einer mit Erhebungen (114) versehenen äußeren Oberfläche aufweist.

4. Mähdrescher nach Anspruch 3, dadurch gekennzeichnet, daß mehrere voneinander getrennte Erhebungen (114) vorgesehen sind.

5. Mähdrescher nach Anspruch 3 oder 4, dadurch gekennzeichnet, daß die Erhebungen (114) rautenförmig sind.

6. Mähdrescher nach einem der Ansprüche 3 bis 5, dadurch gekennzeichnet, daß das Transportelement (112) eine im wesentlichen flache Außenoberfläche aufweist.

7. Mähdrescher nach einem der Ansprüche 3 bis 6, dadurch gekennzeichnet, daß das Transportelement (112) mit einem Mitnehmerelement (116) ausgestattet ist.

8. Mähdrescher nach Anspruch 7, dadurch gekennzeichnet, daß das Mitnehmerelement (116) über die äußere Oberfläche des Transportelements (112) übersteht und an der vor- und/oder nachlaufenden Seite des Transportelements (112) angeordnet ist.

9. Mähdrescher nach Anspruch 8, dadurch gekennzeichnet, daß das Mitnehmerelement (116) sich über die Länge des Transportelements (112) erstreckt.

10. Mähdrescher nach einem der vorhergehenden Ansprüche, dadurch gekennzeichnet, daß die Erntegutbergungsvorrichtung ein Schneidwerk (102) ist.

11. Erntegutbergungsvorrichtung, insbesondere Schneidwerk (102), mit einer Guttransporteinrichtung zum Transport eines Erntegutstroms, dadurch gekennzeichnet, daß die Guttransporteinrichtung Gut aus dem transportierten Erntegut herauslöst und als Vor-Auslöseeinrichtung wirkt.
